# EUROPEAN PATENT APPLICATION

(11) **EP 1 559 931 A2**
(43) Date of publication of application: **03.08.2005**
(21) Application number: 05100511.4
(22) Date of filing: 27.01.2005
(51) Int. Cl.: F16H 48/22, F16H 48/30

(54) **Hydraulic clutch actuator for limited slip differential assembly**

(30) Priority: 29.01.2004 US 765959
(71) Applicant: DANA CORPORATION, Toledo, OH 43615 (US)
(72) Inventor: Baxter, Ralph W., Fort Wayne, Indiana 46835 (US)
(74) Representative: Jorio, Paolo, Dr. Ing.

(57) **Abstract**

A torque transmitting apparatus for a motor vehicle comprises a housing rotatably supporting a differential assembly (20) including a differential case (22) and at least one output shaft (24a,24b). The torque transmitting apparatus further comprises at least one friction clutch assembly (30) for selectively engaging and disengaging the differential case (22) and the at least one output shaft (24a,24b), and a hydraulic clutch actuator for operating the at least one friction clutch assembly (30) between a disengaged condition and an engaged condition. The hydraulic clutch actuator includes a hydraulic pump (32) providing a hydraulic fluid under pressure and a hydraulic pressure accumulator (36) selectively communicating with the pump for charging the accumulator (36) with the hydraulic fluid under pressure. The hydraulic accumulator (36) is provided for selectively communicating with the at least one friction clutch assembly (30) for selectively setting the friction clutch assembly (30) in the engaged condition.

## Description

### BACKGROUND OF THE INVENTION

### 1. Field of the Invention

The present invention relates to torque transmitting apparatuses, and more particularly to a limited slip differential assembly for motor vehicles having at least one friction clutch assembly and a hydraulic clutch actuator including a hydraulic pump and a hydraulic pressure accumulator.

### 2. Description of the Prior Art

Conventionally, differentials well known in the prior art, are arranged in a power transmission system of a motor vehicle to allow a pair of output shafts operatively coupled to an input shaft to rotate at different speeds, thereby allowing the wheel associated with each output shaft to maintain traction with the road while the vehicle is turning. Such a device essentially distributes the torque provided by the input shaft between the output shafts. However, these types of differentials known in the art as an open differentials, i.e. a differential without clutches or springs, are unsuitable in slippery conditions where one wheel experiences a much lower coefficient of friction than the other wheel; for instance, when one wheel of a vehicle is located on a patch of ice or mud and the other wheel is on dry pavement. In such a condition, the wheel experiencing the lower coefficient of friction loses traction and a small amount of torque to that wheel will cause a "spin out" of that wheel. Since the maximum amount of torque, which can be developed on the wheel with traction, is equal to torque on the wheel without traction, i.e. the slipping wheel, the engine is unable to develop any torque and the wheel with traction is unable to rotate. Thus, the necessity for a differential, which limits the differential rotation between the output shafts to provide traction on slippery surfaces, is well known.

Such differential assemblies are typically called limited slip differentials. Conventionally, they use a frictional clutch between the side gear and the differential case. The frictional clutch may be selectively actuated by various hydraulic actuator assemblies, which are constructed of elements disposed inside the differential casing. The hydraulic actuator assemblies internal to the differential case often include displacement pumps disposed inside the differential casing and actuated in response to a relative rotation between the differential case and the output shaft. The displacement pumps are usually in the form of internal gear pumps, such as gerotor pumps adapted to convert rotational work to hydraulic work. In the internal gear pumps, an inner gear having outwardly directed teeth cooperates with an external gear having inwardly directed teeth so that fluid chambers therebetween increase and decrease in volume as the inner and outer gears rotate in a housing. By connecting the inlet and outlet of the device to the proper location along the sides of the gear set, the variable displacement chambers receive and discharge hydraulic fluid so that the device can function as a pump or motor. A shaft or other mechanical device can be connected to either the inner or outer gear depending upon the type of device. The hydraulic actuator assemblies further include a hydraulic piston member for frictionally loading the friction clutch.

Recent advances in vehicle control may require the disabling of the limited slip feature of the differential at moderate to high speeds. One such system is an anti-lock braking system (ABS) that automatically controls wheel slip or prevents sustained wheel locking on braking. The limited slip feature may interfere with the performance of the ABS feature. The other such system is a yaw stability control, which uses the vehicle's brakes to correct the trajectory of the vehicle during a turn. The impulse braking of the yaw stability control feature generates a speed difference between the wheels on either side of the vehicle. The limited slip feature will engage due to this speed difference and may interfere with the performance of the yaw stability control feature. There is therefore a need to disable the limited slip feature of the hydraulic limited slip differential during specified conditions to ensure proper performance of the devices like ABS and the yaw stability control while also allowing the limited slip feature to be enabled at other specified conditions where traction may be needed and where ABS and yaw control are not essential. There is a problem with current hydraulically actuated limited slip differentials in that they do not have a simple on/off capability which is separate and distinct from the hydraulic pressure supply/control circuit actuating the clutch assemblies.

Therefore, there is a need for an improved control of a torque transmitting apparatus having a limited slip function to overcome the shortcomings of the prior art.

### SUMMARY OF THE INVENTION

The present invention provides an improved torque transmitting apparatus providing both limited slip and open differential capabilities.

The torque transmitting apparatus in accordance with the preferred embodiment of the present invention is a vehicle drive axle assembly including a selectively operable limited slip differential (LSD) assembly rotatably supported within an axle housing. The differential assembly includes a differential case and at least one output shaft. The drive axle assembly further comprises at least one friction clutch assembly for selectively engaging and disengaging the differential case and the at least one output shaft, and a hydraulic clutch actuator for operating the at least one friction clutch assembly between a disengaged condition and an engaged condition. Preferably, the friction clutch assembly includes a number of alternating outer friction plates non-rotatably coupled to the differential case and inner friction plates drivingly coupled to one of the output axle shafts.

The hydraulic clutch actuator includes a hydraulic pump providing a hydraulic fluid under pressure and a hydraulic pressure accumulator selectively communicating with the pump for charging the accumulator with the hydraulic fluid under pressure. The hydraulic accumulator is provided for selectively communicating with the at least one friction clutch assembly for selectively setting the clutch assembly in the engaged condition.

The hydraulic clutch actuator further includes a directional valve providing selective fluid communication of pressurized fluid from the pump to the hydraulic pressure accumulator and from the hydraulic pump and a fluid reservoir. The directional valve directs the pressurized fluid from the hydraulic pump to the hydraulic pressure accumulator until a pressure within the accumulator reaches a predetermined value and directs the fluid from the hydraulic pump to the fluid reservoir when the pressure in the accumulator reaches the predetermined value. The hydraulic clutch actuator also includes a solenoid-operated control valve providing selective fluid communication of the pressurized fluid from the pump to the at least one friction clutch assembly for selectively setting the clutch assembly in the engaged condition. Preferably, the directional valve and the control valve are mounted within the axle housing. Furthermore in accordance with the preferred embodiment of the present invention communication passages fluidly connecting the hydraulic pump to the hydraulic pressure accumulator through the directional valve and the control valve are formed within the axle housing.

Therefore, the drive axle assembly in accordance with the present invention allows to selectively control the hydraulic clutch actuator for selectively frictionally loading the clutch assembly.

### BRIEF DESCRIPTION OF THE DRAWINGS

Other objects and advantages of the invention will become apparent from a study of the following specification when viewed in light of the accompanying drawings, wherein:
Fig. 1 is a sectional view of a drive axle assembly in accordance with the preferred embodiment of the present invention;
Fig. 2 is a sectional view of a neck portion of the drive axle assembly in accordance with the preferred embodiment of the present invention;
Fig. 3 is a schematic diagram showing a hydraulic circuit of a hydraulic clutch actuator in accordance with the preferred embodiment of the present invention.

### DETAILED DESCRIPTION OF PREFERRED EMBODIMENTS

The preferred embodiment of the present invention will now be described with the reference to accompanying drawings.

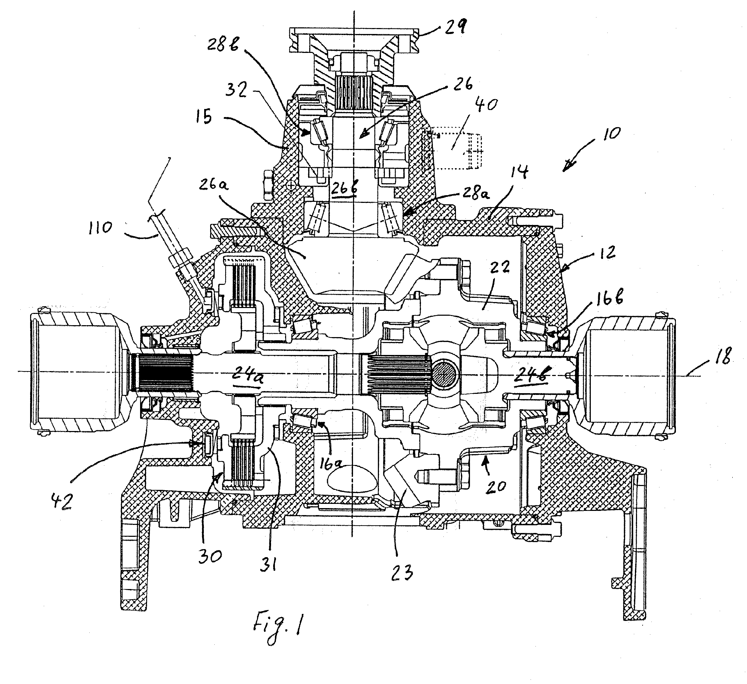

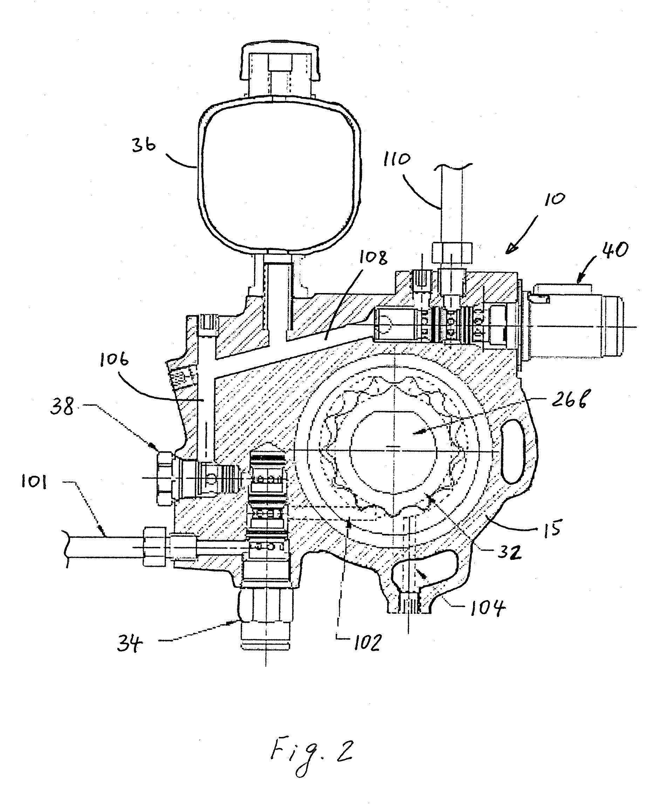

Figs. 1 and 2 depicts a torque transmitting apparatus in the form of a vehicle drive axle assembly 10 including a selectively operable limited slip differential (LSD) assembly 20. However, it is to be understood that while the present invention is described in relation to the limited slip differential of the vehicle drive axle assembly, the present invention is equally suitable for use in any torque transmitting gear assembly including hydraulically actuated friction couplings.

The drive axle assembly 10 comprises an axle housing 12 operatively secured to a vehicle body (not shown). The axle housing 12 includes a differential housing portion 14 rotatably supporting the differential assembly 20, and a substantially tubular neck portion 15 extending from the differential housing portion 14 for rotatably supporting an input shaft in the form of a drive pinion 26. The differential assembly 20 comprises a differential case 22 rotatably supported by the axle housing 12 through antifriction bearings 16a and 16b for rotation about an axis 18. The differential case 22 is driven by a pinion gear 26a of the drive pinion 26 transmitting a drive torque from a vehicular powerplant (not shown) to a ring gear 23 attached to the differential case 22. A differential gear mechanism disposed within the differential case 22 is operatively coupled to output axle shafts 24a and 24b for allowing differential rotation thereof. Preferably, the differential gear mechanism includes a set of pinion gears rotatably supported on a pinion shaft secured to the differential case 22. The pinion gears engage a pair of opposite output, or side, gears adapted to rotate about the axis 18. The output gears are coupled to the output axle shafts 24a and 24b. Thus, the input torque from the drive pinion 26 is transferred from the ring gear 23 to the differential case 22, which drives the differential gear mechanism. The drive pinion 26 further includes a pinion shaft 26b operatively coupled at an outward end thereof to a vehicular propeller shaft (not shown) driven by the vehicular powerplant (not shown), such as an internal combustion engine, through an input flange 29. A inward end of the pinion shaft 26b is provided with the pinion gear 26a in mesh with the ring gear 23. The pinion shaft 26b of the drive pinion 26 is rotatably supported within the neck portion 15 of the axle housing 12 through antifriction bearings 28a and 28b.

The axle assembly 10 further includes a limited slip device in the form of a hydraulically actuated friction clutch assembly 30 which, when engaged, limits the speed differential between the output gears 24a and 24b.

The friction clutch assembly 30 of the limited slip device is disposed within the differential housing portion 14 of the axle housing 12 outside the differential case 22. Preferably, the friction clutch assembly 30 includes sets of alternating outer and inner friction plates. Conventionally, an outer circumference of the outer friction plates is provided with projections that non-rotatably engages corresponding grooves formed in a clutch drum 31, which, in turn is non-rotatably coupled to the differential case 22. Similarly, an inner circumference of the inner friction plates is provided with projections that non-rotatably engage corresponding grooves formed in the output shaft 24a. At the same time, both the outer and inner friction plates are slideable in the axial direction. The inner and outer clutch plates are adapted to frictionally engage each other to form a torque coupling, limited slip arrangement between the differential case 22 and the output shaft 24a of the differential gear mechanism.

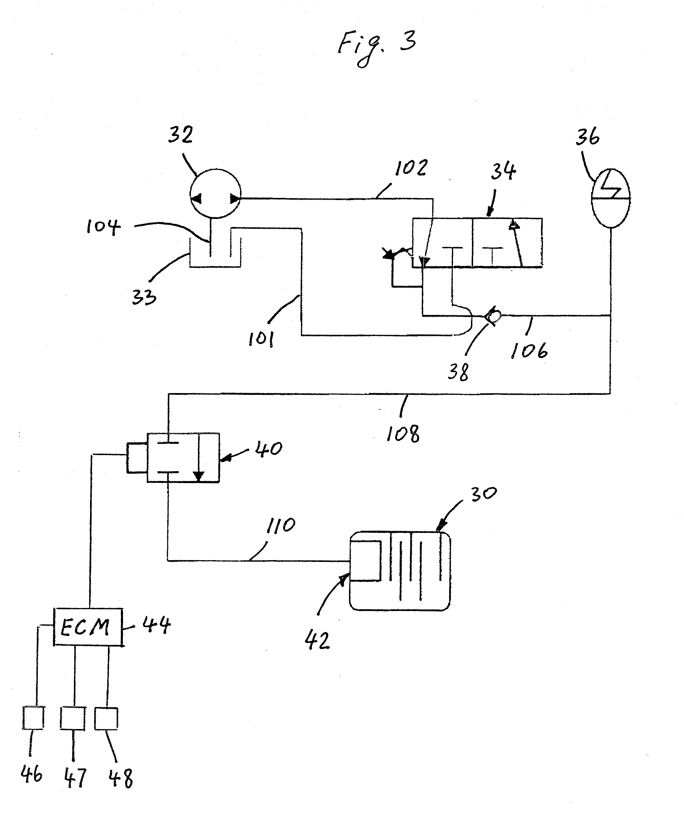

The clutch assembly 30 is selectively switched between a disengaged condition and an engaged condition by a hydraulic clutch actuator including a hydraulic circuit illustrated in Fig. 2 and schematically depicted in Fig. 3. In accordance with the preferred embodiment of the present invention, the hydraulic clutch actuator includes a hydraulic pump 32, a directional valve 34, a hydraulic pressure accumulator 36, a solenoid-operated control valve 40, and a piston assembly 42 for axially loading the clutch assembly 30, interconnected through a network of hydraulic pipelines and communication passages. More specifically, as illustrated in Figs. 2 and 3, the hydraulic pump 32 pumps hydraulic fluid out of an fluid reservoir 33 through an intake passageway 101 formed within the neck portion 15 of the axle housing 12. The fluid reservoir 33 is, preferably, disposed in the axle housing 12. The flow of the pressurized hydraulic fluid generated by the pump 32 goes to the directional valve 34 trough an exhaust passageway 102 providing fluid communication between an exhaust port of the hydraulic pump 32 and the directional valve 34. The directional valve 34 is in fluid communication with the hydraulic pressure accumulator 36 through a first communication passage 106. Preferably, the first communication passage 106 includes a check valve 38 preventing the fluid flow in the direction from the accumulator 36 to the directional valve 34. Furthermore, the hydraulic circuit of the preferred embodiment of the present invention includes a second communication passage 108 for fluidly connecting the hydraulic pressure accumulator 36 with the control valve 40. The control valve 40 fluidly communicates with the piston assembly 42 through a delivery passage 110.

Preferably, in accordance with the preferred embodiment of the present invention shown in detail in Fig. 2, the intake passageway 101, the exhaust passage 102, the first and second communication passages 106 and 108, respectively, are formed integrally within the neck portion 15 of the axle housing 12. As illustrated in Figs. 1 and 2, the delivery passage 110 in the form of a tube extending from the control valve 40 to the piston assembly 42 outside the axle housing 12. Alternatively, the delivery passage 110 may be formed within the axle housing 12. Further preferably, in accordance with the preferred embodiment of the present invention as shown in detail in Fig. 2, the directional valve 34, the check valve 38 and the control valve 40 are disposed within the neck portion 15 of the axle housing 12. The hydraulic pressure accumulator 36 is mounted to the neck portion 15 of the axle housing 12.

The solenoid-operated control valve 40 is controlled by an electronic control module (ECM) 44 in the form of a CPU or computer. The solenoid-operated control valve 40 is controlled by the ECM 44 based on one or more vehicle parameters as control inputs, such as a vehicle speed, a wheel speed difference, vehicle yaw rate, a vehicle lateral acceleration, a steering angle, an engine throttle position, a brake application, an anti-lock brake system (ABS) activation, an ice detection, a moisture detection, a vehicle driveline configuration and a yaw stability control system actuation, and a programmable control mechanism could be used to interface with the hydraulic actuated limited slip differential. The ECM 44 is also connected to a source of an electric power supply, such as an electric storage battery (not shown) mounted on the motor vehicle. In the exemplary embodiment illustrated in Fig. 3, the electronic control module 44 receives signals from a number of sensors, including, but not limited to, an ABS activation sensor 46 that detects the activation of the ABS system, a right wheel speed sensor 47 and a left wheel speed sensor 48. It will be appreciated that the electronic control module 44 may receive signals from any appropriate sensors, such as a steering angle sensor, a torque sensor, etc.

The piston assembly 42 is substantially conventional and includes a hydraulically actuated piston disposed within a piston housing for reciprocating therewithin, and serves to compress and engage the friction plates of the clutch assembly 30 in order to retard any speed differential between the output shaft 24a and the differential case 22. This results in a retardation of any speed differential between the output shafts 24a and 24b. Pressurized hydraulic fluid to actuate the piston assembly 42 and engage the clutch assembly 30 is provided by the hydraulic accumulator 36.

Preferably, the hydraulic pump 32 is a gerotor pump disposed within the neck portion 15 of the axle housing 12 about the pinion shaft 26b of the drive pinion 26. The hydraulic pump 32 generates a flow of pressurized hydraulic fluid whenever the drive pinion 26 is rotated to transmit torque to the ring gear 23 of the differential assembly 20. It will be appreciated that a hydraulic pressure generated by the pump 32 is substantially proportional to a rotational speed of the pinion shaft 26b of the drive pinion 26. However, it will be appreciated that any appropriate arrangement and type of the hydraulic pump is within the scope of the present invention, such as gear pump, vane pump, piston pump etc., driven by any appropriate source of power, such as electric motor, axle shaft, etc. The hydraulic pump 32 is employed to provide the pressurized hydraulic fluid to charge the accumulator 36 with the pressurized hydraulic fluid.

In operation, as the drive pinion 26 rotates, the hydraulic pump 32 pumps lubricating oil out of the fluid reservoir 33, and generates a flow of the hydraulic fluid under pressure in the hydraulic circuit. The flow of the pressurized hydraulic fluid goes to the directional valve 34 trough the exhaust passage 102. The directional valve 34 directs the flow of the pressurized hydraulic fluid through the first communication passage 106 to the hydraulic accumulator 36 for charging the accumulator 36 with the hydraulic fluid under pressure when a pressure of the hydraulic fluid stored within the accumulator 36 is below a predetermined value. When the hydraulic accumulator 36 is fully charged, i.e. when the pressure of the hydraulic fluid stored within the accumulator 36 reaches the predetermined value, then the directional valve 34 directs the flow of the pressurized hydraulic fluid back to the fluid reservoir 33 through a return passage 101, or, alternatively, into another hydraulic circuit. Thus, the hydraulic circuit of the present invention is adapted to maintain a constant pressure in the accumulator 36.

In normal operation conditions, the control valve 40 is closed, thus preventing the flow of the pressurized hydraulic fluid from the hydraulic accumulator 36 to the piston assembly 42 and keeping the clutch assembly 30 in the disengaged condition. However, when a control algorithm determines a need for locking the differential assembly 20, the electronic control module 44 opens the solenoid-operated control valve 40 to directs the flow of the pressurized hydraulic fluid from the hydraulic accumulator 36 to the piston assembly 42 through the second communication passage 108 and the delivery passage 110 in order to engage the clutch assembly 30. More specifically, the pressurized fluid in the piston assembly 42 creates an axial force upon the piston for loading the clutch assembly 30, which is further resisted by the friction plates. The loading of the clutch assembly 30 allows for a torque transfer distribution between the axle shafts 24a and 24b. As the pressure of the hydraulic fluid in the hydraulic circuit starts to lower, the directional valve 34 shifts back to again direct the flow of the pressurized hydraulic fluid to the hydraulic accumulator 36 for recharging the accumulator 36.

When the control algorithm determines that the clutch assembly 30 is no longer needed to be engaged, the electronic control module 44 closes the solenoid-operated control valve 40 to remove pressure from the piston assembly 42 and, thus, disengage the clutch assembly 30.

More specifically, in certain conditions the limited slip feature of the present invention may interfere with the performance of the ABS feature. In order to prevent such an interference, when the clutch assembly 30 is engaged and the ABS system is activated, the electronic control module 44 receives a signal from the ABS activation sensor 46 and sends a control signal to the solenoid-operated control valve 40 to close and, thus, disengage the clutch assembly 30 to ensure proper performance of the ABS system while allowing the limited slip feature to be enabled at other specified conditions where traction may be needed and where ABS system is not activated.

Similarly, if the vehicle is outfitted with a yaw stability control, the ECM 44 disables the limited slip feature of the hydraulic limited slip differential assembly 20 during specified conditions to ensure proper performance of the yaw stability control.

Therefore, the torque transmitting apparatus in accordance with the present invention includes a novel arrangement of a hydraulic clutch actuator provided for selectively frictionally loading the clutch assembly.

The foregoing description of the preferred embodiments of the present invention has been presented for the purpose of illustration in accordance with the provisions of the Patent Statutes. It is not intended to be exhaustive or to limit the invention to the precise forms disclosed. Obvious modifications or variations are possible in light of the above teachings. The embodiments disclosed hereinabove were chosen in order to best illustrate the principles of the present invention and its practical application to thereby enable those of ordinary skill in the art to best utilize the invention in various embodiments and with various modifications as are suited to the particular use contemplated, as long as the principles described herein are followed. Thus, changes can be made in the above-described invention without departing from the intent and scope thereof. It is also intended that the scope of the present invention be defined by the claims appended thereto.

## Claims

1. A torque transmitting apparatus comprising:
a differential assembly including a differential case and at least one output shaft;
at least one friction clutch assembly for selectively engaging and disengaging said differential case and said at least one output shaft; and
a hydraulic clutch actuator for selectively operating said at least one friction clutch assembly between a disengaged condition and an engaged condition;
said hydraulic clutch actuator including a hydraulic pump providing a hydraulic fluid under pressure and a hydraulic pressure accumulator selectively communicating with said hydraulic pump for charging said hydraulic pressure accumulator with said hydraulic fluid under pressure;
said hydraulic pressure accumulator selectively communicating with said at least one friction clutch assembly for selectively engaging said at least one clutch assembly.

2. The torque transmitting apparatus as defined in claim 1, further including a housing rotatably supporting said differential assembly and a drive pinion provided for rotating said differential assembly.

3. The torque transmitting apparatus as defined in claim 2, wherein said hydraulic pump is mounted within said housing about a pinion shaft of said drive pinion.

4. The torque transmitting apparatus as defined in claim 1, wherein said hydraulic pump is a gerotor pump.

5. The torque transmitting apparatus as defined in claim 2, wherein said hydraulic clutch actuator further includes a directional valve provided for selectively directing the hydraulic fluid from said pump to said hydraulic pressure accumulator.

6. The torque transmitting apparatus as defined in claim 5, wherein said directional valve is mounted within said housing.

7. The torque transmitting apparatus as defined in claim 1, wherein said at least one friction clutch assembly includes a piston assembly provided for setting said clutch assembly in said engaged condition in response to hydraulic pressure from said accumulator.

8. The torque transmitting apparatus as defined in claim 1, further including a fluid reservoir for storing a supply of said hydraulic fluid, said fluid reservoir is in fluid communication with said hydraulic pump.

9. The torque transmitting apparatus as defined in claim 2, further including a fluid reservoir disposed in said housing for storing a supply of said hydraulic fluid, said fluid reservoir is in fluid communication with said hydraulic pump.

10. The torque transmitting apparatus as defined in claim 9, wherein said hydraulic clutch actuator further includes a directional valve provided for selectively direct the hydraulic fluid from said pump to said hydraulic pressure accumulator and from said hydraulic pump to said fluid reservoir.

11. The torque transmitting apparatus as defined in claim 10, wherein said directional valve directs said fluid from said hydraulic pump to said hydraulic pressure accumulator until a pressure within said accumulator reaches a predetermined value and directs said fluid from said hydraulic pump to said fluid reservoir when the pressure in said hydraulic pressure accumulator reaches said predetermined value.

12. The torque transmitting apparatus as defmed in claim 1, wherein said hydraulic accumulator is mounted to said housing.

13. The torque transmitting apparatus as defined in claim 2, wherein said hydraulic pump is activated in response to rotation of said drive pinion.

14. The torque transmitting apparatus as defined in claim 2, wherein said hydraulic clutch actuator further includes a control valve providing selective fluid communication between said hydraulic pressure accumulator and said at least one friction clutch assembly for selectively setting said clutch assembly in said engaged condition.

15. The torque transmitting apparatus as defined in claim 14, wherein said control valve is mounted within said housing.

16. The torque transmitting apparatus as defined in claim 14, wherein said control valve is a solenoid-operated valve.

17. The torque transmitting apparatus as defined in claim 6, further including a first communication passage integrally formed within said housing for fluidly connecting said directional valve with said accumulator.

18. The torque transmitting apparatus as defined in claim 15, further including a second communication passage integrally formed within said housing for fluidly connecting said accumulator with said control valve.

19. The torque transmitting apparatus as defined in claim 14, wherein said control valve is actuated by an electronic control module in response to at least one condition.

20. The torque transmitting apparatus as defined in claim 19, wherein said at least one condition is an activation of an anti-lock braking system of a vehicle.

21. The torque transmitting apparatus as defined in claim 1, wherein said hydraulic clutch actuator further includes a directional valve providing selective fluid communication of said pump with said hydraulic pressure accumulator.

22. The torque transmitting apparatus as defined in claim 1, wherein said hydraulic clutch actuator further includes a control valve providing selective fluid communication between said hydraulic pressure accumulator and said at least one friction clutch assembly for selectively setting said clutch assembly in said engaged condition.

23. A torque transmitting apparatus comprising:
a housing rotatably supporting a differential assembly and a drive pinion provided for rotating said differential assembly;
said differential assembly including a differential case and at least one output shaft;
a friction clutch assembly for selectively engaging and disengaging said differential case and said at least one output shaft;
a hydraulic clutch actuator for operating said friction clutch assembly between a disengaged condition and an engaged condition; and
a fluid reservoir disposed in said housing for storing a supply of said hydraulic fluid;
said hydraulic clutch actuator including a hydraulic pump mounted within said housing about a pinion shaft of said drive pinion and providing a hydraulic fluid under pressure, a hydraulic pressure accumulator mounted to said housing and selectively communicating with said pump for charging said accumulator with said hydraulic fluid under pressure, a directional valve mounted within said housing and provided for selectively directing the hydraulic fluid from said pump to said hydraulic pressure accumulator and from said hydraulic pump to said fluid reservoir, a solenoid-operated control valve mounted within said housing and providing selective fluid communication between said hydraulic pressure accumulator and said friction clutch assembly for selectively setting said clutch assembly in said engaged condition, and an electronic control module actuating said control valve in response to an activation of an anti-lock braking system of a vehicle;
said hydraulic pump being activated in response to rotation of said drive pinion; and
said fluid reservoir being in fluid communication with said hydraulic pump.
